# EUROPÄISCHE PATENTSCHRIFT

(11) **EP 2 026 604 B1**
(45) Veröffentlichungstag und Bekanntmachung des Hinweises auf die Patenterteilung: **06.04.2011**
(21) Anmeldenummer: 08104682.3
(22) Anmeldetag: 09.07.2008
(51) Int. Cl.: H04R 25/00, H01M 2/10

(54) **Batteriefach mit mehreren Greifarmen und damit ausgestattetes Hörgerät**
Battery compartment with several gripping arms and hearing aid equipped with same
Compartiment à pile doté de plusieurs bras de saisie et appareil auditif ainsi équipé

(30) Priorität: 09.08.2007 DE 102007037655
(43) Veröffentlichungstag der Anmeldung: 18.02.2009
(73) Patentinhaber: Siemens Medical Instruments Pte. Ltd., Singapore 139959 (SG)
(72) Erfinder: Sattler, Michael, 91052 Erlangen (DE)
(74) Vertreter: Maier, Daniel Oliver

(56) Entgegenhaltungen:
- JP-A- 2000 164 188
- US-A- 5 226 841
- US-A- 5 265 275
- US-A1- 2005 221 167

## Beschreibung

Die vorliegende Erfindung betrifft ein Batteriefach für eine Hörvorrichtung. Insbesondere bezieht sich die vorliegende Erfindung auf ein Hörgerät mit einem derartigen Batteriefach. Unter dem Begriff Hörvorrichtung wird hier neben einem Hörgerät aber auch ein anderes am Ohr tragbares, schallausgebendes Gerät, wie beispielsweise ein Headset, Kopfhörer und dergleichen, verstanden.

Hörgeräte sind tragbare Hörvorrichtungen, die zur Versorgung von Schwerhörenden dienen. Um den zahlreichen individuellen Bedürfnissen entgegenzukommen, werden unterschiedliche Bauformen von Hörgeräten wie Hinter-dem-Ohr-Hörgeräte (HdO), Hörgerät mit externem Hörer (RIC: receiver in the canal) und In-dem-Ohr-Hörgeräte (IdO), z.B. auch Concha-Hörgeräte oder Kanal-Hörgeräte (ITE, CIC), bereitgestellt. Die beispielhaft aufgeführten Hörgeräte werden am Außenohr oder im Gehörgang getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

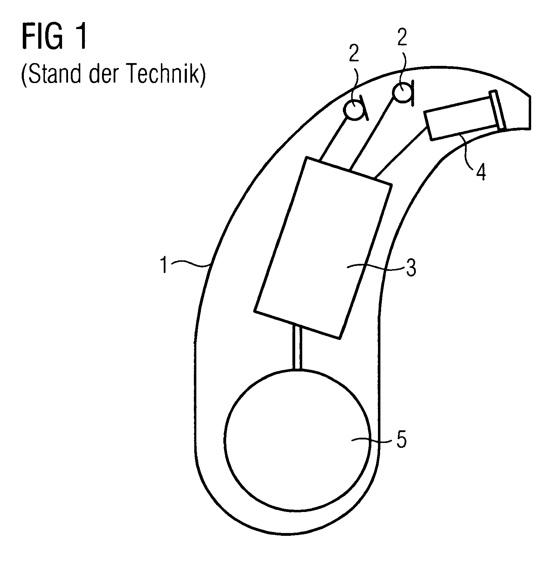

Hörgeräte besitzen prinzipiell als wesentliche Komponenten einen Eingangswandler, einen Verstärker und einen Ausgangswandler. Der Eingangswandler ist in der Regel ein Schallempfänger, z. B. ein Mikrofon, und/oder ein elektromagnetischer Empfänger, z. B. eine Induktionsspule. Der Ausgangswandler ist meist als elektroakustischer Wandler, z. B. Miniaturlautsprecher, oder als elektromechanischer Wandler, z. B. Knochenleitungshörer, realisiert. Der Verstärker ist üblicherweise in eine Signalverarbeitungseinheit integriert. Dieser prinzipielle Aufbau ist in FIG 1 am Beispiel eines Hinter-dem-Ohr-Hörgeräts dargestellt. In ein Hörgerätegehäuse 1 zum Tragen hinter dem Ohr sind ein oder mehrere Mikrofone 2 zur Aufnahme des Schalls aus der Umgebung eingebaut. Eine Signalverarbeitungseinheit 3, die ebenfalls in das Hörgerätegehäuse 1 integriert ist, verarbeitet die Mikrofonsignale und verstärkt sie. Das Ausgangssignal der Signalverarbeitungseinheit 3 wird an einen Lautsprecher bzw. Hörer 4 übertragen, der ein akustisches Signal ausgibt. Der Schall wird gegebenenfalls über einen Schallschlauch, der mit einer Otoplastik im Gehörgang fixiert ist, zum Trommelfell des Geräteträgers übertragen. Die Stromversorgung des Hörgeräts und insbesondere die der Signalverarbeitungseinheit 3 erfolgt durch eine ebenfalls ins Hörgerätegehäuse 1 integrierte Batterie 5.

Für Hörgeräte werden in der Regel Knopfzellen in runder Bauform zur Energieversorgung verwendet. Diese Batterien müssen auswechselbar im Gehäuse des Hörgeräts untergebracht werden. Hierzu werden in den Gehäusen der Hörgeräte Batteriefächer vorgesehen, in die die Batterien eingesetzt werden. Eine der gängigsten Bauformen derartiger Batteriefächer besteht in einem schwenkbaren Fach. Das Fach selbst ist an die Batterieform angepasst und um einen Drehpunkt bzw. ein Scharnier aus dem Hörgerätegehäuse ausschwenkbar. Im ausgeschwenkten Zustand des Batteriefachs ist die Batterie frei zugänglich. Nachteilig an derartigen Batteriefächern ist der verhältnismäßig große Platzbedarf insbesondere für den Schwenkmechanismus.

Aus der Druckschrift DE 199 03 090 A1 ist ein wasserdichtes Hörbehandlungsgerät bekannt, bei dem das Batteriefach gegenüber dem übrigen Gehäuse wasserdicht abgedichtet ist. Das Batteriefach ist mit dem übrigen Gehäuse verschraubt.

Die Druckschrift US 5 265 275 A offenbart einen Pager mit bewegbaren Batteriekontakten. Eine Batterie wird in ein Schubelement eingelegt, welches schräge Wände besitzt. Beim Einschieben in ein Batteriefach werden Kontaktelemente durch die schrägen Wände zusammengedrückt, so dass sie die Batterie in dem Schubelement kontaktieren.

Weiterhin zeigt die Druckschrift US 2005/0221167 A1 ein Hörgerät mit einem Batteriefach. Für den Batteriewechsel wird ein Knopf gedrückt, wodurch eine Abdeckung geöffnet wird. Wenn die neue Batterie eingesetzt ist, gleitet die Abdeckung nach vorne und schließt.

Ferner ist in der Druckschrift JP 2000164188 A ein kreisförmiges Batteriefach für eine Knopfzellenbatterie beschrieben. Das Batteriefach besitzt F-förmige Greifarme, welche über eine elastische Gestaltung ihrer selbst beziehungsweise des Batteriefachs eine Klemmwirkung auf die Batterie ausüben.

Die Aufgabe der vorliegenden Erfindung besteht somit darin, eine Batterie in einer Hörvorrichtung unterzubringen und dabei möglichst wenig Bauraum zu benötigen.

Erfindungsgemäß wird diese Aufgabe gelöst durch ein Batteriefach für eine Hörvorrichtung umfassend mindestens zwei Greifarme, die jeweils an ihrem einen Ende einen Armabschnitt und an ihrem anderen, freien Ende einen Greifabschnitt aufweisen, und ein Schiebeelement, das an den Armabschnitten der Greifarme angreift, so dass in einer ersten Schiebestellung des Schiebeelements zum Einsetzen einer Batterie zwischen die Greifabschnitte die Greifarme eine Offenposition und in einer zweiten Schiebestellung zum Fixieren der Batterie eine Geschlossenposition, in der die Greifabschnitte aufeinander zu bewegt sind, einnehmen. Das Schiebeelement des Batteriefachs ist ein Ring, der entlang der Armabschnitte der Greifarme verschiebbar ist und in der zweiten Schiebestellung in die Greifarme einrastet. Mit dem Ring werden die Greifarme gleichmäßig mit einer einfachen Bedienung zusammengedrückt bzw. geöffnet.

In vorteilhafter Weise ist es mit der erfindungsgemäßen Konstruktion möglich, auf einen Drehmechanismus des Batteriefachs, der verhältnismäßig viel Platz benötigt, zu verzichten.

Vorzugsweise besitzt das Batteriefach einen runden Querschnitt, und es sind drei oder vier Greifarme ringförmig angeordnet. Damit ähnelt das Batteriefach einer Spannzange, in die eine Batterie rasch einsetzbar und fest fixierbar ist. Optional kann die Anzahl der Greifarme auch bei zwei, fünf oder mehr liegen.

Entsprechend einer bevorzugten Ausführungsform sind die Greifarme aus Kunststoff gefertigt. Bei geeigneter Wahl des Kunststoffs verfügen die Greifarme dann über die notwendige Federeigenschaft, so dass keine weiteren Federelemente vorzusehen sind.

Gemäß einer alternativen Ausführungsform können die Greifarme aus Metall mit einer isolierenden Ummantelung gefertigt sein. Die Isolierung ist notwendig, wenn die Greifarme mit mehreren Polen der Batterie in Berührung kommen.

Ferner kann jeder Greifarm einen F-förmigen Querschnitt bzw. ein F-förmiges Profil besitzen, so dass zwischen den parallelen Schenkeln des Querschnitts die in das Batteriefach aufzunehmende Batterie fixierbar ist. Der Schenkel im Mittelbereich des Querschnitts hat dann die Aufgabe, beim Eindrücken der Batterie in die Greifarme diese bereits etwas aneinander anzunähern, so dass das Schiebeelement leichter in seine zweite Schiebestellung gebracht werden kann.

Weiterhin kann zwischen den mindestens zwei Greifarmen eine Kontaktfeder angeordnet sein, um eine Knopfbatterie an ihrem Mantel zu kontaktieren. Damit kann der Zwischenraum zwischen zwei Greifarmen für die Batteriekontaktierung genutzt werden. Außerdem ist es dann nicht notwendig, die Greifarme gleichzeitig zur Kontaktierung zu verwenden, so dass für die Greifarme ein allein für diese Funktion optimiertes Material eingesetzt werden kann.

Entsprechend einer weiteren Ausführungsform ist zentral zwischen den Armabschnitten der Greifarme ein Federkontakt angeordnet, um die einzusetzende Kopfbatterie an einer ihrer Stirnseiten zu kontaktieren. Auch dieser zweite Kontakt kann so leicht speziell hinsichtlich seiner Kontaktierungsfunktion optimiert werden.

Besonders bevorzugt ist ein Hörgerät mit einer Signalverarbeitungseinrichtung und einem oben beschriebenen Batteriefach vorgesehen, in das eine Batterie zur Stromversorgung der Signalverarbeitungseinrichtung einsetzbar ist. Damit kann beispielsweise bei einem Hinter-dem-Ohr-Hörgerät von der Platzersparnis durch das Batteriefach mit den Greifarmen profitiert werden.

Die vorliegende Erfindung ist anhand der beigefügten Zeichnungen näher erläutert, in denen zeigen:
- FIG 1: eine Darstellung des prinzipiellen Aufbaus eines Hörgeräts gemäß dem Stand der Technik;
- FIG 2: eine Seitenansicht eines Batteriefachs in der Offenposition;
- FIG 3: das Batteriefach von FIG 2 in perspektivischer Darstellung;
- FIG 4: einen Querschnitt durch das Batteriefach von FIG 2 mit eingesetzter Batterie;
- FIG 5: das Batteriefach von FIG 4 in perspektivischer Darstellung;
- FIG 6: das Batteriefach von FIG 4 im geschlossenen Zustand und
- FIG 7: das Batteriefach von FIG 6 in perspektivischer Darstellung.

Das nachfolgend näher geschilderte Ausführungsbeispiel stellt eine bevorzugte Ausführungsform der vorliegenden Erfindung dar.

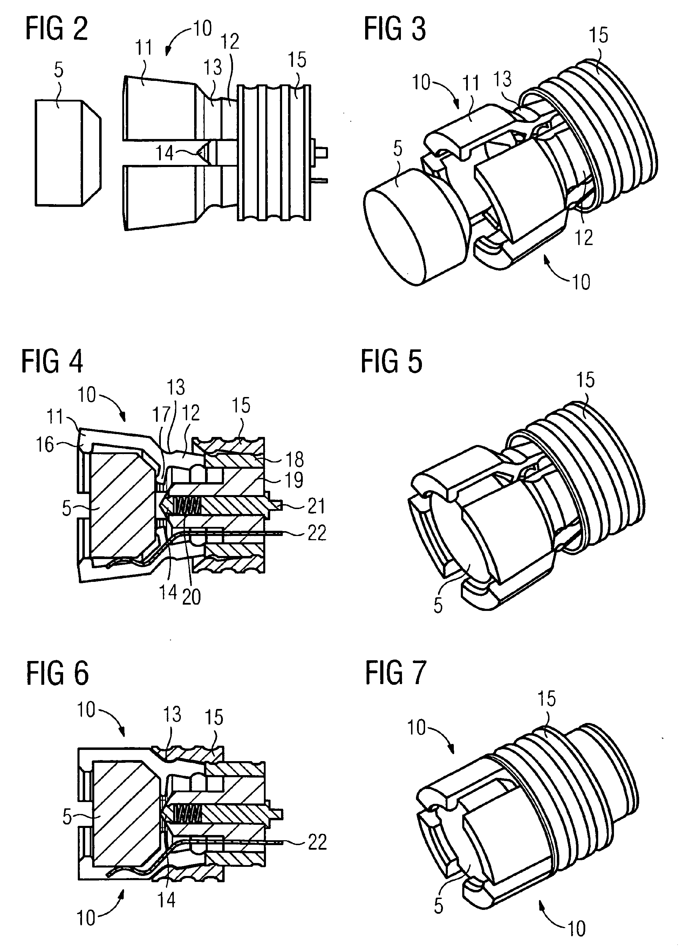

Die Seitenansicht von FIG 2 zeigt ein Batteriefach, das entsprechend dem Prinzip einer Spannzange aufgebaut ist. Es besitzt mehrere Greifarme 10, die sich in einer auseinandergespreizten Position, d.h. einer Offenposition befinden. Jeder Greifarm besteht aus einem Greifabschnitt 11 und einem Armabschnitt 12. Zwischen diesen beiden Abschnitten befindet sich eine Kerbe 13.

In der Offenposition ist das Batteriefach in der Lage, eine Batterie 5, hier eine Knopfzelle, aufzunehmen. Diese Batterie wird im eingesetzten Zustand durch einen Federkontakt 14 an ihrer Stirnseite kontaktiert. Ein Schiebeelement, hier ein Schiebering 15, umgibt die zylinderförmig angeordneten Armabschnitte 12 der einzelnen Greifarme 10. Der Schiebering 15 befindet sich hier in einer ersten Schiebestellung, in der die Greifarme 10 durch den Schiebering 15 nicht zusammengedrückt werden und die Batterie 5 in die Greifarmabschnitte 11 eingesetzt werden kann.

Die dreidimensionale Darstellung von FIG 3 verdeutlicht das Batteriefach von FIG 2. Es sind vier Greifarme 10 am Umfang des zylinderförmigen Batteriefachs gleich verteilt angeordnet. Die Greifarme 10 sind unabhängig voneinander bewegbar.

Weiterhin ist zu erkennen, dass die Greifarme 10 mit ihren Greifabschnitten 11 in der Offenposition einen Hohlraum bilden, in den die Batterie 5 eingesetzt werden kann.

FIG 4 zeigt einen Axialschnitt durch das zylinderförmige Batteriefach in dem Zustand, in dem die Batterie 5 bereits in den Hohlraum zwischen den einzelnen Greifarmen 10 eingesetzt ist. Jeder Greifarm besitzt ein F-förmiges Profil und erstreckt sich senkrecht dazu in etwa viertelkreisförmig. Die beiden parallelen Schenkel 16 und 17 des F-förmigen Profils dienen dazu, die Batterie an ihren beiden Stirnseiten hinsichtlich axialer Bewegung zu fixieren.

Wird die Batterie 5 beim Einsetzen gegen den inneren Schenkel 17, d.h. den Schenkel des F-förmigen Profils, der dem Armabschnitt 12 näher liegt, gedrückt, so schwenkt der jeweilige Greifarm 10 etwas auf die Batterie 5 zu, so dass der äußere Schenkel 16 die Batterie hintergreift. Der Winkel zwischen den einzelnen Greifarmen 10, die in der Offenposition auseinandergespreizt sind, reduzieret sich somit. Um diese Greifbewegung der Greifarme 10 zu ermöglichen, sind diese an ihren Armabschnitten 12 entweder federelastisch oder drehbar gelagert.

Günstigerweise sind die Greifarme 10 zusammen einteilig gespritzt, wobei die Greifarme 10 aus einem zylinderförmigen Abschnitt 18 hervorstehen. Durch die Abstände zwischen den einzelnen Greifarmen 10 können sie in radialer Richtung aufeinander zu bewegt werden.

Des Weiteren ist in FIG 4 der Federkontakt 14 im axialen Schnitt zu entnehmen. Er ist in einem rundlichen Isolierteil 19 innerhalb des rohrförmigen Abschnitts 18 axial beweglich gelagert. Eine Feder 20 drückt ihn in Richtung auf die Batterie 5 zu. Die Feder 20 stützt sich auf einem Kontaktstift 21 ab, der in axialer Richtung verläuft und aus dem Batteriefach ragt.

Eine Kontaktfeder 22, die auf der der Batterie 5 gegenüberliegenden Seite des Batteriefachs ebenfalls aus diesem herausragt, ist in dem runden Isolierteil 19 fixiert. Auf der der Batterie 5 zugewandten Seite verläuft sie zwischen zwei Greifarmen 10 in etwa dem Profil der Greifarme entlang. Sie dient dazu, die Batterie 5 an ihrer Mantelfläche zu kontaktieren.

FIG 5 zeigt das mit der Batterie 5 bestückte Batteriefach von FIG 4, allerdings in der dreidimensionalen Perspektive. Das Batteriefach ist noch nicht vollkommen geschlossen, denn der Schiebering 15 befindet sich noch in seiner ersten Schiebestellung, in der er die Greifarme 10 nicht oder nicht wesentlich zusammendrückt.

FIG 6 zeigt nun einen axialen Schnitt durch das erfindungsgemäße Batteriefach in seiner Geschlossenposition. Die Greifarme 10 umgreifen die Batterie 5, die hier als Knopfbatterie realisiert ist, an ihrem Mantel und teilweise an ihren Stirnseiten. Sie ist damit axial und radial fixiert. Gehalten werden die Greifarme 10 in radialer Richtung durch den Schiebering 15. Er befindet sich hier in der zweiten Schiebestellung und ist in die Nut 13 eingerastet. Der Schiebering 15 wurde also in axialer Richtung von der ersten Stellung in die zweite Stellung geschoben, wodurch die Greifarme noch weiter aufeinander zu bewegt werden und schließlich die Geschlossenposition einnehmen. In dieser Geschlossenposition ist die Batterie 5 nicht mehr aus dem Batteriefach zu entnehmen. Der Mittenkontakt 14 sowie der Mantelkontakt bzw. die Kontaktfeder 22 kontaktieren die Batterie 5 und führen ihre Potentiale an die der Batterie 5 gegenüberliegende Seite des Batteriefachs.

In FIG 7 ist schließlich auch das Batteriefach in der Stellung von FIG 6 in dreidimensionaler Ansicht wiedergegeben. Die Batterie 5 ist durch die Greifarme 10 fixiert und der Schiebering 5 befindet sich eingerastet in der zweiten Schiebestellung. Erfindungsgemäß wird als beim Auswechseln der Batterie das Batteriefach, welches als ein integrierter Bestandteil des Hörgerätegehäuses ausgeführt sein kann, aufgeweitet. Für den Betrieb wird das Batteriefach verriegelt, wobei die Batterie formschlüssig umgriffen wird. Durch diese Realisierung eines Batteriefachs ergibt sich in vorteilhafter Weise ein optimale Platzausnutzung insbesondere bei einem runden Hörgerätedesign, da der Durchmesser des Hörgerätegehäuses nur durch den Durchmesser der Batterie plus die erforderlichen oder gewünschten Wandstärken des Gehäusematerials bestimmt wird.

## Patentansprüche

1. Batteriefach für eine Hörvorrichtung, umfassend
- mindestens zwei Greifarme (10), die jeweils an ihrem einen Ende einen Armabschnitt (12) und an ihrem anderen, freien Ende einen Greifabschnitt (11) aufweisen, und
- ein Schiebeelement (15), das an den Armabschnitten (12) der Greifarme (10) angreift, so dass in einer ersten Schiebestellung des Schiebeelements (15) zum Einsetzen einer Batterie (5) zwischen die Greifabschnitte (11) die Greifarme (10) eine Offenposition und in einer zweiten Schiebestellung zum Fixieren der Batterie (5) eine Geschlossenposition, in der die Greifabschnitte (11) aufeinander zu bewegt sind, einnehmen,
**dadurch gekennzeichnet, dass**
- das Schiebeelement (15) ein Ring ist, der entlang der Armabschnitte (12) der Greifarme (10) verschiebbar ist und in der zweiten Schiebestellung in die Greifarme (10) einrastet.

2. Batteriefach nach Anspruch 1, das einen runden Querschnitt besitzt und drei oder vier Greifarme (10) ringförmig angeordnet und am Umfang gleichmäßig verteilt sind.

3. Batteriefach nach einem der vorhergehenden Ansprüche, wobei die Greifarme (10) aus Kunststoff gefertigt sind.

4. Batteriefach nach Anspruch 1 oder 2, wobei die Greifarme (10) aus Metall mit einer isolierenden Ummantelung gefertigt sind.

5. Batteriefach nach einem der vorhergehenden Ansprüche, wobei jeder Greifarm (10) einen F-förmigen Querschnitt besitzt, so dass zwischen den parallelen Schenkeln (16, 17) des Querschnitts die in das Batteriefach aufzunehmende Batterie (5) fixierbar ist.

6. Batteriefach nach einem der vorhergehenden Ansprüche, wobei zwischen den mindestens zwei Greifarmen (10) eine Kontaktfeder (22) angeordnet ist, um eine Knopfbatterie an ihrem Mantel zu kontaktieren.

7. Batteriefach nach einem der vorhergehenden Ansprüche, wobei zentral zwischen den Armabschnitten der Greifarme (10) ein Federkontakt (14) angeordnet ist, um die einzusetzende Knopfbatterie an einer ihrer Stirnseiten zu kontaktieren.

8. Hörgerät mit einer Signalverarbeitungseinrichtung (3) und einem Batteriefach gemäße einem der vorhergehenden Ansprüche, in das eine Batterie (5) zur Stromversorgung der Signalverarbeitungseinrichtung (3) einsetzbar ist.

## Claims

1. Battery compartment for a hearing apparatus, comprising
- at least two gripping arms (10), each comprising an arm section (12) on its one end and a gripping section (11) on its other free end, and
- a sliding element (15), which engages with the arm sections (12) of the gripping arms (10) so that in a first sliding position of the sliding element (15) the gripping arms (10) assume an open position for inserting a battery (5) between the gripping sections (11) and in a second sliding position assume a closed position for fixing the battery (5), in which closed position the gripping sections (11) are moved towards one another,
**characterised in that**
- the sliding element is a ring, which can be displaced along the arm sections (12) of the gripping arms (10) and engage in the gripping arms (10) in the second sliding position.

2. Battery compartment according to claim 1, which has a round cross-section and three or four gripping arms (10) are arranged in a circle and distributed equally on the periphery.

3. Battery compartment according to one of the preceding claims, with the gripping arms (10) being manufactured from plastic.

4. Battery compartment according to claim 1 or 2, with the gripping arms (10) being manufactured from metal with an insulating casing.

5. Battery compartment according to one of the preceding claims, with each gripping arm (10) having an F-shape cross-section, so that the battery (5) to be accommodated in the battery compartment can be fixed between the parallel legs (16, 17) of the cross-section.

6. Battery compartment according to one of the preceding claims, with a contact spring (22) being arranged between the at least two gripping arms (10) in order to make contact with the casing of a button battery.

7. Battery compartment according to one of the preceding claims, with a spring contact (14) being arranged centrally between the arm sections of the gripping arms (10) in order to make contact with one of the end faces of the button battery to be inserted.

8. Hearing device with a signal processing facility (3) and a battery compartment according to one of the preceding claims, into which a battery (5) can be inserted for supplying power to the signal processing facility (3).

## Revendications

1. Compartiment de générateur électrochimique pour une prothèse auditive, comprenant
- au moins deux bras ( 10 ) de préhension qui ont respectivement, à l'une de leur extrémité, un tronçon ( 12 ) de bras et, à leur autre extrémité libre, un tronçon ( 11 ) de préhension, et
- un élément ( 15 ) coulissant, qui attaque les tronçons ( 12 ) de bras des bras ( 10 ) de préhension, de manière à ce que dans une première position de coulissement de l'élément ( 15 ) coulissant, les bras ( 10 ) de préhension prennent, pour l'insertion d'un générateur ( 5 ) électrochimique entre les tronçons ( 11 ) de préhension, une position ouverte et, dans une deuxième position de coulissement pour immobiliser le générateur ( 5 ) électrochimique, une position fermée, dans laquelle les tronçons ( 11 ) de préhension sont déplacés les uns vers les autres,
**caractérisé en ce que**
- l'élément ( 15 ) coulissant est un anneau, qui peut coulisser le long des tronçons ( 12 ) de bras des bras ( 10 ) de préhension et qui, dans la deuxième position de coulissement, s'encliquette dans les bras ( 10 ) de préhension.

2. Compartiment à générateur électrochimique suivant la revendication 1, qui a une section transversale circulaire et trois ou quatre bras ( 10 ) de préhension disposés annulairement et répartis uniformément sur le pourtour.

3. Compartiment à générateur électrochimique suivant l'une des revendications précédentes, dans lequel les bras ( 10 ) de préhension sont en matière plastique.

4. Compartiment à générateur électrochimique suivant la revendication 1 ou 2, dans lequel les bras ( 10 ) de préhension sont en métal, en ayant une gaine isolante.

5. Compartiment à générateur électrochimique suivant l'une des revendications précédentes, dans lequel chaque bras ( 10 ) de préhension a une section transversale en forme de F, de manière à pouvoir immobiliser le générateur ( 5 ) électrochimique à loger dans le compartiment entre les branches ( 16, 17 ) parallèles de la section transversale.

6. Compartiment à générateur électrochimique suivant l'une des revendications précédentes, dans lequel un ressort ( 22 ) de contact est disposé entre les au moins deux bras ( 10 ) de préhension pour mettre en contact un générateur électrochimique bouton sur sa surface latérale.

7. Compartiment à générateur électrochimique suivant l'une des revendications précédentes, dans lequel il est disposé, d'une manière centrale, entre les tronçons de bras des bras ( 10 ) de préhension, un ressort ( 14 ) de contact pour mettre en contact sur l'un de ses côtés frontaux le générateur électrochimique bouton à insérer.

8. Prothèse auditive comprenant un dispositif ( 3 ) de traitement du signal et un compartiment à générateur électrochimique suivant l'une des revendications précédentes, dans laquelle un générateur ( 5 ) électrochimique peut être inséré pour l'alimentation en courant du dispositif ( 3 ) de traitement du signal.
